# EUROPEAN PATENT APPLICATION

(11) **EP 0 936 331 A2**
(43) Date of publication of application: **18.08.1999**
(21) Application number: 99300899.4
(22) Date of filing: 08.02.1999
(51) Int. Cl.: E05B 49/00, B60R 25/04

(54) **Code verification system**

(30) Priority: 12.02.1998 JP 2992598
(71) Applicant: Mitsuba Corporation, Kiryu-shi, Gunma (JP)
(72) Inventor: Yanase, Atsushi, Tamamuramachi, Sawa-gun, Gunma-ken (JP); Haruyama, Shinichi, Takasaki-shi, Gunma-ken (JP); Nozue, Yutaka, Kasakakemachi, Nitta-gun, Gunma-ken (JP)
(74) Representative: Browne, Robin Forsythe, Dr.

(57) **Abstract**

Provided is a code verification system which allows verification of a unique code in a both quick and reliable manner by using simple structure. An anti-theft ignition key device (7,8) using such a code verification system can improve the level of security and startability of an engine. By receiving a signal from a transmitter (7) for a time duration corresponding to the time duration of a unique code with a receiver, detecting a start point of a code contained in the signal, and moving a section of the signal preceding the start point to the end of the data for determining the authenticity of the thus reconstructed code as the unique code, the unique code can be verified in a both quick and reliable manner without complicating the structure.

## Description

### TECHNICAL FIELD

The present invention generally relates to a code verification system, and in particular to a code verification system which is capable of a quick but reliable code verification.

### BACKGROUND OF THE INVENTION

Conventionally, various anti-theft devices have been proposed for motor vehicles and motorcycles. As disclosed in Japanese patent publication (kokoku) No. 4-15141, the so-called immobilizer system is known. In an immobilizer system, a pair of coils are provided in the key for operating the ignition switch and the key cylinder in the vehicle, respectively, so that a magnetic circuit is formed between the two coils when the key is inserted in the key cylinder, and signals are exchanged between the coils for determining the authenticity of the key.

In such a key device, a transponder, including a coil and an IC circuit and encapsulated in a capsule made of glass, plastic or film, is typically incorporated in the knob of the key. The transmitted signal typically consists of a header section and an ID code section in a Manchester code, and is transmitted in repetition. This signal is received by the receiver incorporated on the side of the key cylinder, and the ignition switch is enabled only when the received ID code is verified to be authentic.

When actually receiving a signal, first of all, bit synchronization of the Manchester code has to be established, and then the header section of the code has to be received before the reception of the entire code sequence may be started for verification. Therefore, if any particular header section is missed, then, it is necessary to wait for the next header section to be received before the reception of an entire code sequence consisting of the header section and an ID code section may be started. In a worst case, it could take as long as twice the time duration for receiving an entire single code sequence. If the code sequence consisting of the header section and the ID code section lasts 40 msec, it could take up to 80 msec to complete a successful reception.

In particular, when such an anti-theft device is applied to motorcycles which are required to be kick-started when the battery is used up, a person who is not particularly powerful can turn the engine only about one revolution by kick-starting, in the case of a 50 cc motorcycle, for example, and it amounts to a time duration of about 50 msec. Therefore, if it takes more than 50 msec for verifying the code, it is impossible to start the engine. This means a poor startability of the engine.

### BRIEF SUMMARY OF THE INVENTION

In view of such problems of the prior art, a primary object of the present invention is to provide a code verification system which allows a code to be verified in a both quick and reliable manner by using a simple structure.

A second object of the present invention is to provide a code verification system which is suitable for use as an anti-theft device for motorcycles.

A third object of the present invention is to provide a code verification system which can improve the startability of the engine while maintaining a high level of security when applied to the anti-theft device for motorcycles.

According to the present invention, such objects can be accomplished by providing a code verification system comprising an external transmitter which transmits a unique code sequence in repetition, a receiver which receives the unique code sequence from the transmitter, and a controller which determines if the received unique code sequence is an authentic code sequence or not by comparing the received code sequence with a prescribed reference code sequence, characterized by that: the controller includes a memory circuit for storing the received code sequence from an arbitrary point for a time duration corresponding to the length of the unique code sequence, and is adapted to detect a reference point of the received code sequence and rearrange the received code sequence into the original code sequence according to the detected reference point, the rearranged code sequence being compared with the prescribed reference code.

Thus, the reception of the entire code sequence can be completed in a minimum time period or a time period corresponding to the duration of a single code sequence, by eliminating the need for waiting for the start of a new code sequence. For instance, the unique code sequence may comprise a header section and an ID code section. According to the present invention, the signal reception may be started at an arbitrary point of the code sequence, and may last only as long as a duration of single code sequence because the received code sequence is stored in the memory circuit, and reconstructed into the original code sequence. As a result, the entire time duration for completing the code verification can be minimized.

Typically, the external transmitter comprises a transponder. The system may be incorporated in an anti-theft system for a motorcycle, and the controller may be adapted to complete the process of code verification during the short time period of kick-starting the engine of the motorcycle. The present invention may also be applied to anti-theft devices for motor vehicles in general where code verification is need to be completed in a relatively short time. For instance, it may be desired to complete code verification as soon as inserting an ignition key and before the engine is cranked by an engine starter motor in motor vehicles in general.

To ensure a reliable code verification, the memory circuit may be adapted to store the received code sequence by a length somewhat longer than the duration of the individual code sequence so that the stored code sequence may be trimmed to the length of the original code sequence for reconstruction.

It is known that the Manchester code sequence is reliable even when the power source is unable to provide a stable supply voltage. When a Manchester code is applied to the present invention, the controller may be adapted to determine if the received code sequence is in synchronism or not, and to move one bit at one end of the code sequence to the other end of the code sequence if the absence of synchronism is detected.

### BRIEF DESCRIPTION OF THE DRAWINGS

Now the present invention is described in the following with reference to the appended drawings, in which:
Figure 1 is a partly broken away front view of an essential part of a key device embodying the present invention;
Figure 2 is a simplified circuit diagram of the key device embodying the present invention; and
Figure 3 is a time chart describing the mode of data exchange in the key device embodying the present invention.

### DETAILED DESCRIPTION OF THE PREFERRED EMBODIMENTS

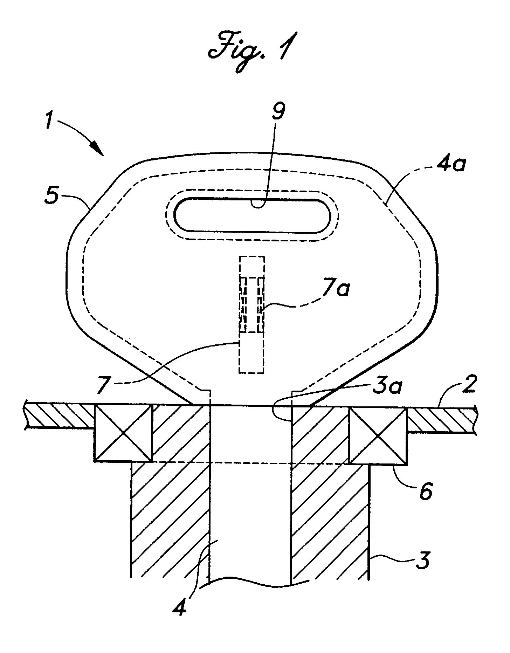

Figure 1 is a front view of an essential part of a key device for a motorcycle embodying the present invention. Referring to Figure 1, the key 1 is designed for operating an ignition switch, and comprises a key shank 4 which is adapted to be fitted into a keyhole 3a of a key cylinder 3 provided in a suitable part 2 of a motorcycle, and a knob 5 having an extended portion 4a, extending from the base end of the key shank 4, integrally insert molded therein.

The key cylinder 3 is provided with three positions, a LOCK position for locking up the steering wheel, an OFF position for turning off the ignition circuit, and an ON position for turning on the ignition circuit in the same manner as in conventional automotive ignition switches, and is connected to a mechanical contact set which is actuated according to the angular position of the key 1 and a lock mechanism associated with a steering shaft.

In this key device, when the key 1 is fitted into the key cylinder 3, and turned to the ON position, radio (electromagnetic) signals are exchanged between the key cylinder 3 and the key 1, and code signal sequences each consisting of a header section and an ID code section consisting of a unique code are repeatedly emitted from the key 1. The ID code sequence is verified against an ID code sequence stored in the vehicle, and the engine is allowed to be operated only when these two ID code sequences agree with each other, and the key is determined to be authentic. To accomplish this, a key cylinder coil 6 is provided around the inlet end of the keyhole 3a of the key cylinder 3, and a transponder 7 serving as a transmitter for transmitting a radio signal to the key cylinder coil 6 is incorporated in the knob 5 of the key 1.

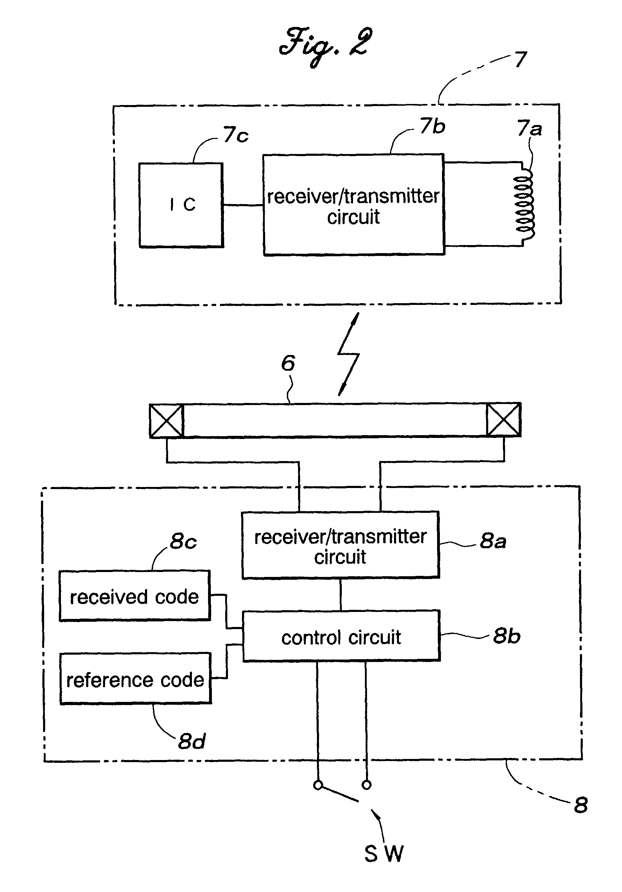

Referring to Figure 2, the transponder 7 fitted in the key 1 comprises an antenna 7a serving as a coil on the side of the key, a transmitter/receiver circuit 7b electrically connected to the antenna 7a, and an IC chip 7c connected to the transmitter/receiver circuit 7b, and is received in a glass tube having both ends closed by heating. The coil 6 fitted in the key cylinder to serve as a part of the receiver for the vehicle is connected to a controller 8. The controller 8 comprises a transmitter/receiver circuit 8a which is electrically connected to the key cylinder coil 6, a control circuit 8b connected to the transmitter/receiver circuit 8a, and first and second memory circuits 8c and 8d connected to the control circuit 8b. The control circuit 8b is also connected to an ON position detecting switch SW which is associated with the key cylinder 3. This ON position detecting switch SW may additionally serve as the power switch for the controller 8.

According to this key device, when the key shank 4 is fitted into the keyhole 3a of the key cylinder 3, and is turned to the ON position, the resulting closure of the ON position detecting switch SW is detected by the control circuit 8b. The control circuit in turn activates the controller 8, and a radio signal is transmitted from the transmitter/receiver circuit 8a via the key cylinder coil 6. When this radio signal is received by the antenna 7a in the transponder 7, an electric voltage is produced in the antenna 7a by electromagnetic induction. This electric power is converted into a direct current, and supplied to the transmitter/receiver circuit 7b and to the IC chip 7c to power them. As a result, a radio signal corresponding to a unique ID code stored in the IC chip 7c is transmitted from the antenna 7a.

The radio signal transmitted from the antenna 7a is received by the key cylinder coil 6, and is forwarded to the control circuit 8b via the transmitter/receiver circuit 8a. The control circuit 8b stores the received code sequence contained in the received radio signal in the first memory circuit 8c, and compares the ID code sequence with the ID code sequence which is stored in the second memory circuit 8d. When these two code sequences agree with each other, the controller 8 forwards an enable signal to an engine control circuit not shown in the drawing to allow the engine to be started. If they do not agree with each other, the engine cannot be started. The engine control circuit may be provided with the functions to enable a starter circuit, a fuel circuit and/or an ignition circuit, and may be integrally formed in a same microprocessor IC as the control circuit 8b.

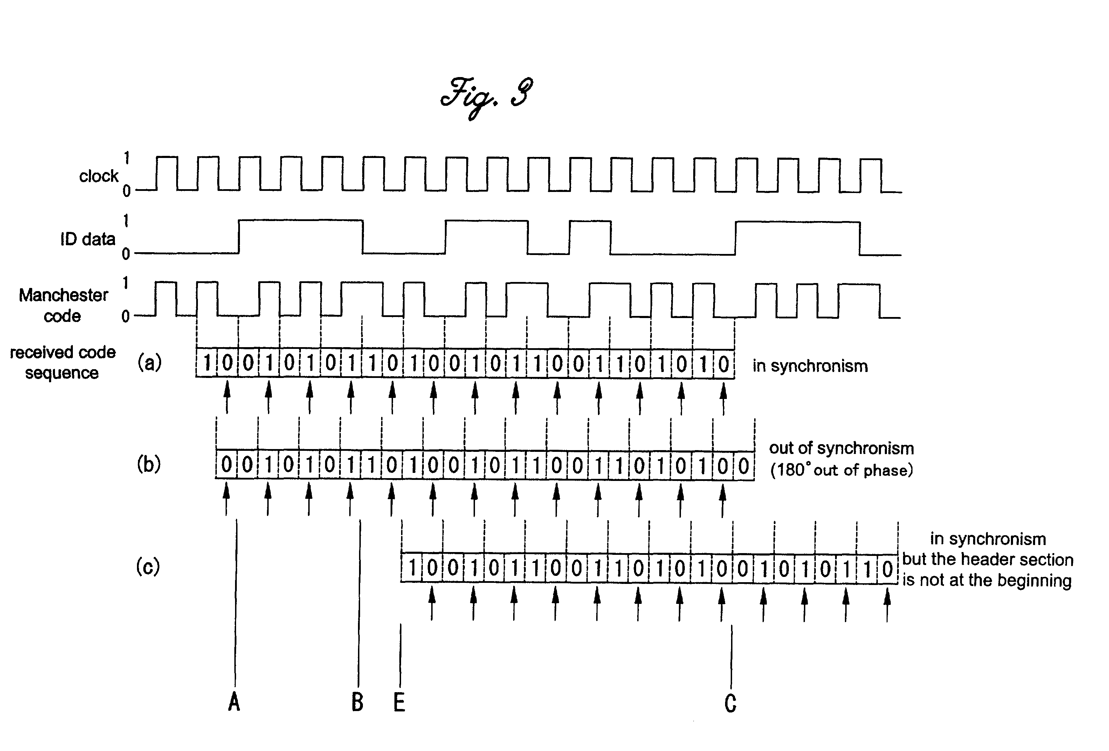

The process of exchanging the signals is described in the following with reference to the flow chart of Figure 3. The code sequence S contained in the transmission signal is comprised of a header section (positions A to B: "111") and an ID code section (positions B to C: "0011101000") which are expressed by a Manchester code synchronizing with the clock of the transmitter.

The code sequence contained in the transmitted signal is repeatedly transmitted from the transmitter, and each code sequence has a fixed length. The receiver starts receiving the signal from an arbitrary point E, and receives the signal for a time duration equal to the entire length of the code sequence S. Alternatively, the signal is received for a time duration somewhat longer than the entire length of the code sequence S, and is appropriately trimmed to the length equal to the length of the code sequence S. The obtained signal is stored as a received code sequence S' in the first memory circuit 8c. It is then determined if the received code sequence S' consists of a Manchester code which is properly synchronized with the clock of the transmitter. According to the Manchester code system, the rising edges and the falling edges of the transmitted signal are identified in synchronism with a clock pulse train in such a manner that "0" and "1" levels of the transmitted signal are given according to the transitions from "1" to "0" and from "0" to "1", respectively, and one bit data can be obtained for each cycle of the clock pulse train. Therefore, if "00" or "11" occurs during any particular cycle of the clock pulse train, it means that the signal is out of synchronization with the clock (with a shift of half the cycle). If a proper synchronization is established, the program flow advances to the next step. If not, the last bit of the received code sequence S' is moved to the beginning of the received code sequence S' or the first bit of the received code sequence S' is moved to the end of the received code sequence S', and the obtained code sequence is used to renew the received code sequence S' before proceeding to the next step.

Then, the header section ("111") is searched from the received code sequence S'. The section preceding the searched header section is moved to the end of the received code sequence, or the section following the searched header section (including the header section) is moved to the beginning of the received code sequence, and the obtained code sequence is used to renew the received code sequence S'. The ID code section or the part of the received code sequence following the header section in the reconstructed received code sequence S' is compared with the ID code stored in the second memory circuit 8d, and is thereby verified of its authenticity. Only the ID code section was compared in this embodiment, but it is also possible to compare the entire received code sequence including the header section.

Various patterns of the received code sequence are described in the following with reference to Figure 3. In pattern (a), the header section is nearly at the beginning of the received code sequence, and the received code sequence is in synchronism. In this case, simply by searching for the header section, it is possible to verify the ID code. In pattern (b), the header section is nearly at the beginning of the received code sequence, but the signal is out of synchronism by 180 degrees. It can be seen from the fact that "00" is found during the first cycle of the clock. A proper synchronism can be established by moving the first bit to the last or the last bit to the beginning. Thereafter, the header section is searched, and the ID code can be verified. In pattern (c), the received code sequence starts from an intermediate point of the ID code section. In this case, as there is a proper synchronization, the header section is searched for, and the part preceding the header section is moved to the end of the received code sequence or the header section and the part following the header section are moved to the beginning of the received code sequence. The ID code is then verified. In this case also, if there is no synchronization, a proper synchronization can be achieved by moving the first bit to the last or the last bit to the beginning similarly as in the above mentioned pattern.

The time period required for processing the received signal is significantly shorter than the time period required for actually receiving the signal, and a majority of the processing time is accounted for by the process of receiving the signal. Therefore, when the engine is required to be kick-started, for instance, due to the failure of the battery, the reception and processing of the signal can be completed in a short time period, and the startability of the engine would not be impaired.

Although the header section and the ID code section were based on the Manchester code system in the above described embodiment, it is also possible to use other code systems depending on the arrangement of the transmitter and the receiver. Similarly, although the header section and the ID code section were consecutively arranged in the code sequence S, they can be spaced apart by a desired number of bits. The present invention was applied to a motorcycle in the above described embodiment, but as can be readily appreciated, the present invention is equally applicable to speed up the exchange of signals and the code verification in motor vehicles in general, house doors, safes, ID cards, credit cards and so on.

Thus, according to the present invention, a signal from an external transmitter is received by a receiver from an arbitrary point for a duration corresponding to the length of the unique code sequence, and the start point of the code sequence contained in the received data is detected. The part of the data preceding the header section is moved to the end of the data so that it may be used for verifying the authenticity of the signal in a very short time period without complicating the structure. This structure can be applied to a key device by providing a transmitter in the key and a receiver in the key cylinder to allow the verification of a key in both quick and reliable manner. The key device can improve the startability of the engine while ensuring a high level of security.

Although the present invention has been described in terms of a preferred embodiment thereof, it is obvious to a person skilled in the art that various alterations and modifications are possible without departing from the scope of the present invention which is set forth in the appended claims.

## Claims

1. A code verification system comprising an external transmitter (7b) which transmits a unique code sequence in repetition, a receiver (8a) which receives the unique code sequence from the transmitter, and a controller (8) which determines if the received unique code sequence is an authentic code sequence or not by comparing the received code sequence with a prescribed reference code sequence, characterized by that:
the controller includes a memory circuit (8d) for storing the received code sequence from an arbitrary point for a time duration corresponding to the length of the unique code sequence, and is adapted to detect a reference point of the received code sequence and rearrange the received code sequence into the original code sequence according to the detected reference point, the rearranged code sequence being compared with the prescribed reference code.

2. A code verification system according to claim 1, wherein the external transmitter comprises a transponder (7).

3. A code verification system according to claim 1, wherein the system is incorporated in an anti-theft system for a motorcycle, and the controller is adapted to complete the process of code verification during the short time period of kick-starting the engine of the motorcycle.

4. A code verification system according to claim 1, wherein the unique code sequence comprises a header section and an ID code section, and the reference point consists of the header section.

5. A code verification system according to claim 1, wherein the memory circuit (8d) is adapted to store the received code sequence by a length somewhat longer than the duration of the individual code sequence, and the stored code sequence is trimmed to the length of the original code sequence for reconstruction.

6. A code verification system according to claim 1, wherein the code sequence is based on a Manchester code sequence, and the controller is adapted to determine if the received code sequence is in synchronism or not, one bit at one end of the code sequence being moved to the other end of the code sequence if the absence of synchronism is detected.
